# EUROPÄISCHE PATENTSCHRIFT

(11) **EP 3 067 225 B1**
(45) Veröffentlichungstag und Bekanntmachung des Hinweises auf die Patenterteilung: **05.05.2021**
(21) Anmeldenummer: 16000594.8
(22) Anmeldetag: 11.03.2016
(51) Int. Cl.: B60H 1/00

(54) **FAHRZEUG MIT EINER ELEKTROMASCHINE SOWIE VERFAHREN ZUM BETRIEB EINER ZUGEORDNETEN KLIMAANLAGE**
VEHICLE WITH AN ELECTRIC ENGINE AND METHOD FOR OPERATING AN ASSOCIATED AIR CONDITIONING SYSTEM
VEHICULE COMPRENANT UN MOTEUR ELECTRIQUE ET PROCEDE DE FONCTIONNEMENT D'UNE CLIMATISATION ASSOCIEE

(30) Priorität: 11.03.2015 DE 102015003119
(43) Veröffentlichungstag der Anmeldung: 14.09.2016
(73) Patentinhaber: MAN Truck & Bus SE, 80995 München (DE)
(72) Erfinder: Theimert, Carmen, 82131 Stockdorf (DE)
(74) Vertreter: Liebl, Thomas

(56) Entgegenhaltungen:
- DE-A1-102006 038 677
- DE-A1-102011 075 284
- DE-T2- 60 319 291

## Beschreibung

Die Erfindung betrifft ein Fahrzeug, insbesondere ein Hybridfahrzeug oder ein elektrisch angetriebenes Fahrzeug, mit wenigstens einer Elektromaschine nach Anspruch 1, ein Verfahren zum Betrieb einer Klimaanlage eines Fahrzeugs nach Anspruch 6 sowie ein Nutzfahrzeug als Hybridfahrzeug oder als elektrisch angetriebenes Fahrzeug nach Anspruch 8.

Rein elektrisch angetriebene Fahrzeuge mit einer oder mehreren Elektromaschinen, die motorisch bzw. generatorisch betrieben werden können, sind ebenso wie Hybridfahrzeuge, die wechselweise mit einem Verbrennungsmotor oder einer Elektromaschine betrieben werden, allgemein bekannt. Es sind auch Varianten mit mehreren Elektromotoren, insbesondere als Radnabenmotoren, bekannt. Weiter sind Ausführungsvarianten bekannt, bei denen ein Verbrennungsmotor als sogenannter "range extender" während des Fahrbetriebs zur Ladung eines Energierspeichers bzw. einer Traktionsbatterie einer eletrischen Antriebsmaschine bzw. eines Antriebs-Elektromotor betrieben wird. Bei allen Varianten von Fahrzeugen mit wenigstens einer Elektromaschine bzw. wenigstens einem Elektromotor wird an den elektrifizierten Hochvoltkomponenten, insbesondere an einem oder mehreren Energiespeichern (zum Beispiel Traktionsbatterien, um nur ein Beispiel zu nennen) und/oder an einer zugehörigen Leistungselektronik, Wärmeenergie erzeugt, welche durch Kühlung abgeführt werden muss. Insbesondere moderne Energiespeicher, wie zum Beispiel Traktionsbatterien, sind sehr temperaturempfindlich und müssen möglichst auf einer konstanten Betriebstemperatur im Bereich von ca. 40° bis 50°C gehalten werden, da sonst ein effektiver und störungsfreier Betrieb nicht gewährleistet werden kann.

Es ist bereits bekannt (DE 10 2004 038 790 A1), die Leistungselektronik inklusive Traktionsbatterie eines elektrischen Antriebs eines Hybridfahrzeugs mittels einer herkömmlichen Außenluftkühlung zu kühlen, wobei bedarfsweise, insbesondere für eine Temperaturvergleichmäßigung die Möglichkeit einer Zusatzkühlung mittels eines Wärmetauschers einer Klimaanlage für einen Fahrgastraum besteht. Ein solches Kühlsystem unter Verwendung von Außenluft ist zur Abführung der betriebsbedingten Abwärme von modernen Hochleistungs-Traktionsbatterien und für eine genaue Temperaturregelung auch in Verbindung mit einer bedarfsweisen Ankopplung an eine Klimaanlage nicht mehr praxisgerecht.

Weiter ist ein System für ein Hybrid-Kraftfahrzeug zum Erwärmen und/oder Kühlen einer Traktionsbatterie und eines Kraftfahrzeuginnenraums bekannt (DE 10 2009 042 774 A1) mit einem Batterie-Kühlmittelkreislauf und mit einem Fahrzeuginnenraum-Kühlmittelkreislauf, welche beide über einen Kreislauf-Wärmeübertrager und Ventile koppelbar sind. Auch hier werden im Wesentlichen Umgebungsluft-Wärmetauscher verwendet, wobei bedarfsweise in den Batterie-Kühlmittelkreislauf der Kühlkreis einer Klimaanlage einkoppelbar ist.

Nachteilig steht bei beiden vorstehenden Kühlsystemen nach dem Stand der Technik bei großem Kühlbedarf nur bei laufendem Kompressor der Klimaanlage eine zur Kühlung temperaturkritischer Hybrid- bzw. Hochvoltkomponenten ausreichende Kühlleistung zur Verfügung, was insbesondere bei einem Fahrzeugstillstand mit einem Stillstand des Kompressors zur Beschädigung und im Extremfall zur Zerstörung temperaturempfindlicher Hochvoltkomponenten führen kann. Besonders ungünstige Temperaturverhältnisse für die Hochvoltkomponenten ergeben sich, wenn das Fahrzeug vor dem Stillstand mit dem Verbrennungsmotor betrieben wurde und dieser im Stillstand noch eine große Abwärme abgibt und dadurch ungünstig die Hochvoltkomponenten aufheizt.

Die DE 603 19 291 T2 offenbart ein Fahrzeug mit einem Kältemittelkreislauf, in dem ein Kondensator, zwei Verdampfer und ein Kompressor vorgesehen sind, so dass das System entweder zur Klimatisierung oder als Wärmepumpe wirken kann.

Aus der DE 10 2006 038 677 A1 ist eine Klimaanlage für ein Fahrzeug mit einem Kältemittelkreislauf, der einen Verdampfer aufweist, und mit einem Kühlkreislauf, in dem eine zu kühlende Komponente angeordnet ist, bekannt. In dem Kühlkreislauf ist ferner ein Kältespeicher integriert.

Die DE 10 2011 075 284 A1 beschreibt einen Kältespeicher, der mit einer Klimaanlage zusammenwirkt. Der Kältespeicher kann entweder separat zu einem Kältemittelkreislauf so angeordnet sein, dass zu kühlende Luft einen Verdampfer und anschließend den Kältespeicher durchströmt. Alternativ kann der Kältespeicher im Kältemittelkreislauf angeordnet sein.

Aufgabe der Erfindung ist es, ein Fahrzeug, insbesondere ein Hybridfahrzeug oder ein elektrisch angetriebenes Fahrzeug, mit wenigstens einer Elektromaschine und mit einer Klimaanlage so weiterzubilden, dass in allen Betriebsstadien eine ausreichende Kühlleistung zur Kühlung thermisch gekoppelter Hochvoltkomponenten zur Verfügung gestellt werden kann. Eine weitere Aufgabe der Erfindung besteht darin, ein geeignetes Betriebsverfahren vorzuschlagen.

Diese Aufgabe wird gelöst mit den Merkmalen der unabhängigen Patentansprüche. Vorteilhafte Ausgestaltungen sind Gegenstand der darauf rückbezogenen Unteransprüche.

Gemäß Anspruch 1 wird ein Fahrzeug, insbesondere ein Hybridfahrzeug oder ein rein elektrisch angetriebenes Fahrzeug mit wenigstens einer Elektromaschine und mit einer Klimaanlage vorgeschlagen, mit der wenigstens eine Hochvoltkomponente, insbesondere wenigstens ein Energiespeicher, zum Beispiel eine Traktionsbatterie, und/oder wenigstens eine Leistungselektronik als elektrifizierte bzw. elektrifizierbare Hochvoltkomponente, kühlbar ist. Erfindungsgemäß weist die Klimaanlage einen aufladbaren Kältespeicher als Energiepuffer auf, der zu einem definiert vorgegebenen Zeitpunkt zur Kühlung und bei abgestelltem Motor (Motor steht hier als Oberbegriff für Verbrennungsmotor und/oder Elektromaschine) im Standbetrieb für eine Nachkühlung der wenigstens eine Hochvoltkomponente nutzbar und/oder entladbar. Diese erfindungsgemäße Lösung ermöglicht es, die temperaturkritischen Hochvoltkomponenten durch Nutzung und Entladung des Kältespeichers bei Bedarf zu kühlen, wobei dadurch zum Schutz der temperaturkritischer Hochvoltkomponenten eine Nachkühlung bei abgestelltem Motor im Standbetrieb durch Nutzung und Entladung des Kältespeichers realisiert werden kann. Auch im Fahrbetrieb bei laufender Klimaanlage können gegebenenfalls erforderliche kurzzeitige Kälteleistungsspitzen zur Einhaltung einer gleichmäßigen Komponententemperatur unter Nutzung des Kältespeichers zur Verfügung gestellt werden.

Erfindungsgemäß weist die Klimaanlage einen Kältemittelkreislauf für ein Kältemittel als Arbeitsmedium auf, wobei in dem Kältemittelkreislauf, vorzugsweise nacheinander in Kältemittelströmungsrichtung, wenigstens ein Verdichter bzw. Kompressor, wenigstens ein Kondensator, wenigstens ein Expansionsorgan und wenigstens ein Verdampfer angeordnet sind. Weiter ist erfindungsgemäß ein Kühlkreissystem vorgesehen, das separat vom Kältemittelkreislauf mit einem vom Arbeitsmedium des Kältemittelkreislaufes unabhängigen, eigenen, vorzugsweise flüssigen, Kühlmittel dergestalt strömungstechnisch zusammenhängend betrieben wird, dass ein, einen Verteiler-Kühlkreis ausbildender erster Kühlkreis des Kühlkreissystems wenigstens einen, mit dem wenigstens einen Verdampfer des Kältemittelkreislaufes mittelbar oder unmittelbar wärmeübertragend koppelbaren Wärmetauscher für eine Kälteübertragung und wenigstens eine Kühlmittel-Verteilereinheit aufweist. Es versteht sich, dass der erste Kühlkreis bei Bedarf auch noch weitere Bestandteile aufweisen kann.

An die wenigstens eine Kühlmittel-Verteilereinheit ist erfindungsgemäß ein zweiter Kühlkreis als Kältespeicher-Kühlkreis mit wenigstens einem, vorzugsweise durch einen Kühlmittelbehälter gebildeten, Kältespeicher bzw. Kühlmittelspeicher angeschlossen, in dem mittels der wenigstens einen Kühlmittel-Verteilereinheit aus dem Verteiler-Kühlkreis Kälteenergie einspeicherbar ist (zum Beispiel ein, eine definierte Temperatur aufweisendes, kaltes Kühlmittel zu seiner Aufladung einlagerbar ist) und/oder daraus für eine Entladung zu einer Kühlfunktion in wenigstens einen weiteren Kühlkreis und/oder zur Rückführung in den Verteiler-Kühlkreis entnehmbar ist.

Weiter ist an die Kühlmittel-Verteilereinheit erfindungsgemäß ein dritter Kühlkreis als Hochvoltkomponenten-Kühlkreis angeschlossen, in dem mittels der wenigstens einen Kühlmittel-Verteilereinheit Kühlmittel aus dem Verteiler-Kühlkreis und/oder aus dem Kältespeicher-Kühlkreis dergestalt umgewälzt wird, dass dadurch die in einem thermischen Kontakt mit dem Hochvoltkomponenten-Kühlkreis stehende und/oder in den Hochvoltkomponenten-Kühlkreis eingeschaltete wenigstens eine Hochvoltkomponente gekühlt wird.

Erfindungsgemäß ist an die wenigstens eine Kühlmittel-Verteilereinheit ein vierter Kühlkreis als Fahrzeuginnenraum-Kühlkreis, insbesondere als HVAC-Kühlkreis angeschlossenn, mittels dem wenigstens ein Modul zur Klimatisierung eines Fahrzeuginnenraums, insbesondere eines Fahrerhausinnenraums eines Nutzfahrzeugs, kühlbar ist. Mit einem derartigen Aufbau ist besonders bevorzugt eine bedarfsweise Kühlung bzw. Klimatisierung wenigstens eines HVAC-Moduls (HVAC = Heating-Ventilation-Airconditioning) möglich, insbesondere von Modulen zur Klimatisierung eines Fahrerhausinnenraums eines Nutzfahrzeugs.

Die beschriebene Ausführungsform hat folgende Funktion: vorzugsweise ist der wenigstens eine Verdichter des Kältemittelkreislaufs während des gesamten Fahrbetriebs aktiviert, so dass am wenigstens einen Verdampfer als Kältegenerator ständig eine Kälteleistung über den angekoppelten Wärmetauscher an das Kühlmittel im Verteiler-Kühlkreis des Kühlkreissystems abgegeben wird und für eine Verteilung durch die Kühlmittel-Verteilereinheit zur Verfügung steht. Mit der Kühlmittel-Verteilereinheit wird sensorgesteuert das kalte Kühlmittel vorrangig dem Hochvoltkomponenten-Kühlkreis zur sicheren Kühlung der wenigstens einen Hochvoltkomponente zugeführt, wobei die Kühlleistung an der wenigstens einen Hochvoltkomponente durch die über die Kühlmittel-Verteilereinheit gesteuerte Kühlmittelströmung und die Kühlmittel-Temperatur gegeben ist.

Erfindungsgemäß kann der Fahrzeuginnenraum- bzw. HVAC-Kühlkreis, insbesondere zur Kühlung eines Fahrerhausinnenraums, mittels der Kühlmittel-Verteilereinheit mit Kühlmittel versorgt werden. Falls noch überschüssige Kühl-Energie am Verdampfer und dem angekoppelten Wärmetauscher zur Verfügung steht, kann der Kältespeicher-Kühlkreis versorgt werden und Kälteenergie, zum Beispiel in Form von kaltem Kühlmittel, mittels der Kühlmittel-Verteilereinheit im Kältespeicher gespeichert werden. Dadurch wird im Kältespeicher Kühlenergie für spätere Anforderungen zur Entnahme gepuffert. Insbesondere können dies Anforderungen von Kühlleistungsspitzen sein oder das Erfordernis einer Nachkühlung im Fahrzeugstillstand.

Zweckmäßig kann wenigstens ein Ausgleichsbehälter für das Kühlmittel in wenigstens einem der Kühlkreise, vorzugsweise im Kältespeicher-Kühlkreis, angeordnet sein.

Ausdrücklich wird darauf hingewiesen, dass der Einfachheit halber und zum einfacheren Verständnis die erfindungsgemäß angegebenen und beanspruchten Bauteile, insbesondere Kompressor, Kondensator, Expansionsorgan, Verdampfer, Wärmetauscher, Kältespeicher, Ausgleichsbehälter, etc. oftmals auch als Einzelbauteile benannt sind. Je nach den individuell vorliegenden Gegebenheiten können für die gleiche Funktion auch mehrere entsprechende Bauteile hintereinander oder parallel, beispielsweise zwei Kältespeicher verwendet werden. Auch solche mehrteiligen Anordnungen sollen von den Ansprüchen und der Beschreibung ausdrücklich mit umfasst sein.

Die Kühlmittel-Verteilereinheit ist, wie die vorstehenden Ausführungen gezeigt haben, erfindungsgemäß Bestandteil einer Verteilungs- und Durchfluss-Regelung für das Kühlmittel und weist dazu wenigstens ein Steuerventil und wenigstens eine Fördereinrichtung, insbesondere wenigstens eine Pumpe, zum Betrieb des Kreislaufs auf. Für eine geeignete Regelung wird wenigstens ein Temperatur-Sollwert und/oder wenigstens ein Temperatur-Sollwertverlauf bezüglich der wenigstens einen temperaturkritischen Hochvoltkomponente, vorgegeben. Über eine Kühl-Sensorik, gegebenenfalls mit einer Mehrzahl von Temperatursensoren an den jeweils zu kühlenden Komponenten, wird wenigstens ein Temperatur-Istwert erfasst, wobei mittels der Kühlmittel-Verteilereinheit und dem geeignet verteilten Kühlmittel-Strom die Kühlenergie zur Darstellung der Sollwerte geregelt und/oder wenn möglich Kühlenergie im Kältespeicher gepuffert wird.

Die Kühlmittel-Verteilereinheit kann als separates Verteiler-Modul realisiert sein. Je nach den Gegebenheiten hinsichtlich eines Einbauraums, der Größendimensionierung, der Montagemöglichkeiten, etc. kann in einem solchen Verteilermodul auch wenigstens eine Komponente der Kühlkreisläufe des Kühlkreissystems und/oder wenigstens eine Hochvoltkomponente und/oder wenigstens eine Innenraum- bzw. HVAC-Komponente integriert sein.

Das Kühlkreissystem kann im Vergleich zum Kältemittelkreislauf vorteilhaft mit einem vergleichsweise geringeren Druck energetisch günstiger und mit praktisch keinen Dichtungsproblemen betrieben werden. Zudem kann im Kühlkreissystem ein einfaches Wasser-Frostschutzmittel-Gemisch, insbesondere ein unkritisches, kostengünstiges Wasser-Glykol-Gemisch als Kühlmittel verwendet werden.

Die Aufgabe der Erfindung wird hinsichtlich des Verfahrens mit den Merkmalen des Anspruchs 6 gelöst. Die Verfahrensmerkmale, insbesondere auch hinsichtlich der gesteuerten Beschickung und Entladung des Kühlspeichers in Verbindung mit relevanten Betriebsbedingungen, wurden bereits vorstehend erläutert.

Anhand einer Zeichnung wird ein Ausführungsbeispiel der Erfindung weiter erläutert.

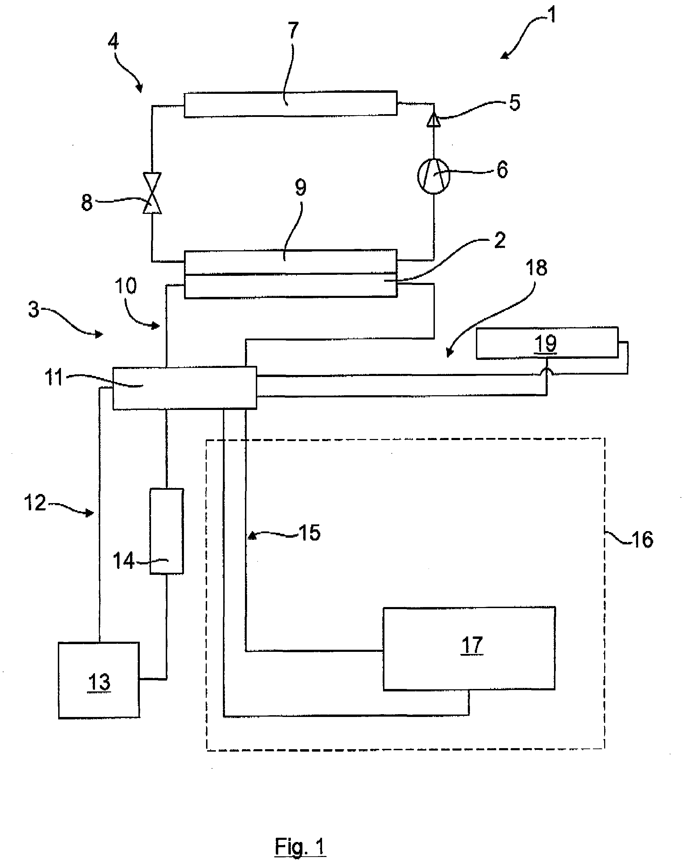

Die einzige Figur zeigt ein Flussschaltbild einer Klimaanlage 1 mit einem über einen Wärmetauscher 2 angekoppelten Kühlkreissystem 3. Die Klimaanlage 1 enthält einen Kältemittelkreislauf 4 für ein Kältemittel als Arbeitsmedium, wobei nacheinander in Kältemittelströmungsrichtung (Pfeil 5) ein zum Beispiel als Kompressor ausgebildeter Verdichter 6, ein Kondensator 7, ein Expansionsorgan 8 und ein Verdampfer 9 als Kältegenerator angeordnet sind.

Mit dem Verdampfer 9 ist der Wärmetauscher 2 thermisch gekoppelt, der in einem ersten Kühlkreis als Verteiler-Kühlkreis 10 des Kühlkreissystems 3 zusammen mit einer Kühlmittel-Verteilereinheit 11 angeordnet ist. Die Kühlmittel-Verteilereinheit 11 ist so ausgeführt, dass sie gesteuert das über den Wärmetauscher 2 zugeführte Kühlmittel auf vier angeschlossene Kühlkreise je nach Bedarf und Anforderung strömungsmäßig und dadurch mit zugeordneter Kälteleistung verteilen kann.

Dazu ist an die Kühlmittel-Verteileinheit 11 ein zweiter Kühlkreis als Kältespeicherkühlkreis 12 angeschlossen, in dem ein hier beispielhaft schematisch als Kühlmittelbehälter dargestellter Kältespeicher 13 sowie weiter lediglich beispielhaft ein Ausgleichsbehälter 14 angeordnet sind.

An die Kältemittel-Verteilereinheit 11 ist zudem ein dritter Kühlkreis als Hochvoltkomponenten-Kühlkreis 15 angeschlossen, als Bestandteil eines Kühlsystems 16 zur Kühlung wenigstens einer Hochvoltkomponente 17. Als nur schematisch dargestellte Hochvoltkomponente 17 wird hier insbesondere wenigstens ein Energiespeicher, zum Beispiel eine Traktionsbatterie, und/oder wenigstens ein zugeordnetes Elemente einer Leistungselektronik verstanden, welches vom Kühlmittel im Hochvoltkomponenten-Kühlkreis 15 zur Kühlung für einen guten Wärmeübergang durchströmt und/oder angeströmt und/oder über wenigstens einen thermisch gekoppelten Wärmetauscher gekühlt wird.

Weiter ist an die Kühlmittel-Verteilereinheit 11 erfindungsgemäß ein vierter Kühlkreis als HVAC-Kühlkreis 18 zur Kühlung wenigstens eines hier lediglich schematisch dargestellten HVAC-Modules 19 angeschlossen. Unter einem HVAC-Modul wird hier bevorzugt wenigstens ein Element zur Klimatisierung des Fahrerhausinnenraums verstanden.

Die Kühlmittel-Verteilereinheit 11 weist wenigstens ein, hier nicht dargestelltes Steuerventil und wenigstens eine Fördereinrichtung, bevorzugt eine Pumpe, auf, die von einer Regelung betätigt werden und mit denen über eine Sensorik die Strömungen in den Kühlkreisen 10, 12, 15 und 18 geeignet entsprechend der Kühlanforderungen verteilt werden. Die an die Kühlmittel-Verteilereinheit 11 angeschlossenen (schematisch dargestellten) Leitungen der Kühlkreise 10, 12, 15, 18 sind jeweils eine Vor- und eine Rücklaufleitung.

### Bezugszeichenliste

1 Klimaanlage
2 Wärmetauscher
3 Kühlkreissystem
4 Kältemittelkreislauf
5 Pfeil
6 Verdichter
7 Kondensator
8 Expansionsorgan
9 Verdampfer
10 Verteiler-Kühlkreis
11 Kühlmittel-Verteilereinheit
12 Kältespeicher-Kühlkreis
13 Kältespeicher
14 Ausgleichsbehälter
15 Hochvoltkomponenten-Kühlkreis
16 Hybrid-Kühlsystem
17 Hybrid-Komponente
18 HVAC-Kühlkreis
19 HVAC-Modul

## Patentansprüche

1. Fahrzeug, mit wenigstens einer Elektromaschine und mit einer Klimaanlage (1), mit der wenigstens eine Hochvoltkomponente kühlbar ist,
wobei die Klimaanlage (1) einen aufladbaren Kältespeicher (13) als Energiepuffer aufweist, der zu einem definiert vorgegebenen Zeitpunkt zur Kühlung und bei abgestelltem Motor im Standbetrieb für eine Nachkühlung der wenigstens einen Hochvoltkomponente nutzbar und/oder entladbar ist,
wobei die Klimaanlage (1) einen Kältemittelkreislauf (4) für ein Kältemittel als Arbeitsmedium aufweist, wobei in dem Kältemittelkreislauf (4) wenigstens ein Verdichter (6), wenigstens ein Kondensator (7), wenigstens ein Expansionsorgan (8) und wenigstens ein Verdampfer (9) als Kältegenerator angeordnet sind,
wobei ein Kühlkreissystem (3) vorgesehen ist, das separat vom Kältemittelkreislauf (4) mit einem vom Arbeitsmedium des Kältemittelkreislaufes (4) unabhängigen, eigenen Kühlmittel dergestalt strömungstechnisch zusammenhängend betreibbar ist,
dass ein, einen Verteiler-Kühlkreis (10) ausbildender erster Kühlkreis des Kühlkreissystems (3) wenigstens einen mit dem Verdampfer (9) des Kältemittelkreislaufes (4) wärmeübertragend koppelbaren Wärmetauscher (2) für eine Kälteübertragung sowie wenigstens eine Kühlmittel-Verteilereinheit (11) aufweist,
dass an die wenigstens eine Kühlmittel-Verteilereinheit (11) ein zweiter Kühlkreis als Kältespeicher-Kühlkreis (12) des Kühlkreissystems (3) angeschlossen ist, der wenigstens einen Kältespeicher (13) aufweist, in den mittels der wenigstens einen Kühlmittel-Verteilereinheit (11) aus dem Verteiler-Kühlkreis (10) Kälteenergie einspeicherbar ist und aus dem ein, eine definierte Temperatur aufweisendes Kühlmittel für eine Kühlfunktion in wenigstens einem weiteren an die Kühlmittel-Verteilereinheit (11) angeschlossenen Kühlkreis (15; 18) und/oder zur Rückführung in den Verteiler-Kühlkreis (10) entnehmbar ist,
dass an die wenigstens eine Kühlmittel-Verteilereinheit (11) ein dritter Kühlkreis als Hochvoltkomponenten-Kühlkreis (15) angeschlossen ist, in dem mittels der wenigstens einen Kühlmittel-Verteilereinheit (11) Kühlmittel aus dem Verteiler-Kühlkreis (10) und/oder aus dem Kältespeicher-Kühlkreis (12) dergestalt umwälzbar ist, dass die in einem thermischem Kontakt mit dem Hochvoltkomponenten-Kühlkreis (15) stehende und/oder in den Hochvoltkomponenten-Kühlkreis (15) eingeschaltete wenigstens eine Hochvoltkomponente (17) kühlbar ist, und
wobei die Kühlmittel-Verteilereinheit (11) eine Stelleinrichtung einer Regelungsvorrichtung ist, die wenigstens ein Steuerventil und wenigstens eine Fördereinrichtung aufweist, wobei vorgesehen ist, dass wenigstens ein Temperatur-Sollwert oder wenigstens ein Temperatur-Sollwertverlauf bezüglich der wenigstens einen Hochvoltkomponente vorgegeben ist und weiter wenigstens eine Kühl-Sensorik an der oder im Bereich der wenigstens einen zu kühlenden Hochvoltkomponente vorgesehen ist, mittels der wenigstens ein Temperatur-Istwert erfassbar ist, so dass mittels der Kühlmittel-Verteilereinheit (11) ein Kühlmittelstrom so verteilbar ist, dass der wenigstens eine Temperatur-Sollwert einregelbar ist und Kühlenergie im Kältespeicher (13) pufferbar ist, **dadurch gekennzeichnet, dass**
an die wenigstens eine Kühlmittel-Verteilereinheit (11) ein vierter Kühlkreis als Fahrzeuginnenraum-Kühlkreis angeschlossen ist, mittels dem wenigstens ein Modul (19) zur Klimatisierung eines Fahrzeuginnenraums kühlbar ist.

2. Fahrzeug nach Anspruch 1, **dadurch gekennzeichnet, dass** der vierte Kühlkreis als HVAC-Kühlkreis (18) an die wenigstens eine Kühlmittel-Verteilereinheit (11) angeschlossen ist.

3. Fahrzeug nach Anspruch 1 oder Anspruch 2, **dadurch gekennzeichnet, dass** in wenigstens einem der Kühlkreise (10, 12, 15, 18), vorzugsweise im Kältespeicher-Kühlkreis (12), wenigstens ein Ausgleichsbehälter (14) für das Kühlmittel angeordnet ist.

4. Fahrzeug nach einem der Ansprüche 1 bis 3, **dadurch gekennzeichnet, dass** die Kühlmittel-Verteilereinheit (11) als Verteiler-Modul ausgebildet ist, wobei bevorzugt vorgesehen ist, dass in die Kühlmittel-Verteilereinheit (11) wenigstens eine Komponente der Kühlkreisläufe (10, 12, 15, 18) des Kühlkreissystems (3) und/oder wenigstens eine Hochvoltkomponente (17) integriert ist.

5. Fahrzeug nach einem der Ansprüche 1 bis 4, **dadurch gekennzeichnet, dass** das Kühlkreissystem (3) im Vergleich zum Kältemittelkreislauf (4) mit einem geringeren Druck betrieben ist und/oder mit einem Wasser-Frostschutzmittel-Gemisch, insbesondere einem Wasser-Glykol-Gemisch als Kühlmittel, betrieben ist.

6. Verfahren zum Betrieb einer Klimaanlage in einem Fahrzeug, wobei das Fahrzeug wenigstens eine Elektromaschine und eine Klimaanlage (1) aufweist, mittels der wenigstens eine Hochvoltkomponente gekühlt wird,
wobei die Klimaanlage (1) einen aufladbaren Kältespeicher (13) als Energiepuffer aufweist, der zu einem definiert vorgegebenen Zeitpunkt zur Kühlung und bei abgestelltem Motor im Standbetrieb für eine Nachkühlung der wenigstens eine Hochvoltkomponente genutzt und/oder entladen wird,
wobei die Klimaanlage (1) einen Kältemittelkreislauf (4) für ein Kältemittel als Arbeitsmedium aufweist, wobei in dem Kältemittelkreislauf (4) wenigstens ein Verdichter (6), wenigstens ein Kondensator (7), wenigstens ein Expansionsorgan (8) und wenigstens ein Verdampfer (9) als Kältegenerator angeordnet sind,
wobei ein Kühlkreissystem (3) vorgesehen ist, das separat vom Kältemittelkreislauf (4) mit einem vom Arbeitsmedium des Kältemittelkreislaufes (4) unabhängigen, eigenen Kühlmittel dergestalt strömungstechnisch zusammenhängend betrieben wird,
dass ein einen Verteiler-Kühlkreis (10) ausbildender erster Kühlkreis des Kühlkreissystems (3) wenigstens einen mit dem Verdampfer (9) des Kältemittelkreislaufes (4) wärmeübertragend koppelbarer Wärmetauscher (2) für eine Kälteübertragung sowie eine Kühlmittel-Verteilereinheit (11) aufweist,
dass an die Kühlmittel-Verteilereinheit (11) ein zweiter Kühlkreis als Kältespeicher-Kühlkreis (12) des Kühlkreissystems (3) angeschlossen ist, der wenigstens einen Kältespeicher (13) aufweist, in den mittels der Kühlmittel-Verteilereinheit (11) aus dem Verteiler-Kühlkreis (10) Kälteenergie einspeicherbar ist und aus dem ein, eine definierte Temperatur aufweisendes Kühlmittel für eine Kühlfunktion in wenigstens einem weiteren an die Kühlmittel-Verteilereinheit (11) angeschlossenen Kühlkreis (15; 18) und/oder zur Rückführung in den Verteiler-Kühlkreis (10) entnommen wird,
dass an die Kühlmittel-Verteilereinheit (11) ein dritter Kühlkreis als Hochvoltkomponenten-Kühlkreis (15) angeschlossen ist, in dem mittels der Kühlmittel-Verteilereinheit (11) Kühlmittel aus dem Verteiler-Kühlkreis (10) und/oder aus dem Kältespeicher-Kühlkreis (12) dergestalt umgewälzt wird, dass die in einem thermischem Kontakt mit dem Hochvoltkomponenten-Kühlkreis (15) stehende und/oder in den Hochvoltkomponenten-Kühlkreis (15) eingeschaltete wenigstens eine Hochvoltkomponente (17) gekühlt wird,
dass an die wenigstens eine Kühlmittel-Verteilereinheit (11) ein vierter Kühlkreis als Fahrzeuginnenraum-Kühlkreis angeschlossen ist, mittels dem wenigstens ein Modul (19) zur Klimatisierung eines Fahrzeuginnenraums gekühlt wird, und
wobei die Kühlmittel-Verteilereinheit (11) eine Stelleinrichtung einer Regelungsvorrichtung ist, die wenigstens ein Steuerventil und wenigstens eine Fördereinrichtung aufweist, wobei vorgesehen ist, dass wenigstens ein Temperatur-Sollwert oder wenigstens ein Temperatur-Sollwertverlauf bezüglich der wenigstens einen Hochvoltkomponente vorgegeben ist und weiter wenigstens eine Kühl-Sensorik an der oder im Bereich der wenigstens einen zu kühlenden Hochvoltkomponente vorgesehen ist, mittels der wenigstens ein Temperatur-Istwert erfasst wird, so dass mittels der Kühlmittel-Verteilereinheit (11) ein Kühlmittelstrom so verteilt wird, dass der wenigstens eine Temperatur-Sollwert eingeregelt wird und Kühlenergie im Kältespeicher (13) gepuffert wird.

7. Verfahren nach Anspruch 6, **dadurch gekennzeichnet,**
**dass** der wenigstens eine Verdichter (6) der Klimaanlage (1) im Fahrbetrieb aktiviert wird, so dass an dem wenigstens einen Verdampfer (9) Kälte erzeugt wird und über den Wärmetauscher (2) an der Kühlmittel-Verteilereinheit (11) zur Verfügung steht,
**dass** durch Ansteuerung der Kühlmittel-Verteilereinheit (11) die für eine jeweils aktuelle Kühlung erforderliche Kühlenergie der wenigstens einen Hochvoltkomponente (17), bevorzugt der wenigstens einen Hochvoltkomponente und wenigstens einem Fahrzeuginnenraum-Modul (19), zugeführt wird und eine demgegenüber überschüssig zur Verfügung stehende Kühlenergie im Kühlspeicher (13) gespeichert wird, und
**dass** bei abgestelltem Motor ohne Verdichter-Betrieb mittels der Kühlmittel-Verteilereinheit (11), insbesondere durch Ansteuerung einer darin enthaltenen Verteilerpumpe, die wenigstens eine Hochvoltkomponente (17) in einer definiert vorgegebenen Nachkühlzeit, gegebenenfalls in Verbindung mit einem Nachlauf wenigstens einer Hochvoltkomponente (17), mit Kühlenergie aus dem Kältespeicher (13) versorgt wird, wobei bevorzugt vorgesehen ist, dass in Abhängigkeit von der Menge der zur Verfügung stehenden Kühlenergie gegebenenfalls auch ein Fahrerhausinnenraum gekühlt wird.

8. Nutzfahrzeug als Hybridfahrzeug oder als elektrisch angetriebenes Fahrzeug nach einem der Ansprüche 1 bis 5 und/oder mit einer, mit einem Verfahren nach einem der Ansprüche 6 und 7 betriebenen Klimaanlage (1).

## Claims

1. Vehicle, comprising at least one electrical machine and comprising an air-conditioning system (1) with which at least one high-voltage component can be cooled,
wherein the air-conditioning system (1) has a rechargeable cold accumulator (13) as energy store, which rechargeable cold accumulator can be used and/or can be discharged at a time prescribed in a defined manner for cooling purposes and, when the engine is turned off in the stationary mode, for after-cooling the at least one high-voltage component,
wherein the air-conditioning system (1) has a refrigerant circuit (4) for a refrigerant as working medium, wherein at least one compressor (6), at least one condenser (7), at least one expansion element (8) and at least one evaporator (9) as cold generator are arranged in the refrigerant circuit (4),
wherein a cooling circuit system (3) is provided, which can be operated in terms of flow separately from the refrigerant circuit (4) with a dedicated coolant, which is independent of the working medium of the refrigerant circuit (4), in such a way
that a first cooling circuit, which forms a distributor cooling circuit (10), of the cooling circuit system (3) has at least one heat exchanger (2), which can be coupled in a heat-transmitting manner to the evaporator (9) of the refrigerant circuit (4), for transmitting cold and has at least one coolant distributor unit (11),
that a second cooling circuit as cold accumulator circuit (12) of the cooling circuit system (3) is connected to the at least one coolant distributor unit (11), which second cooling circuit has at least one cold accumulator (13) in which cold energy can be stored by means of the at least one coolant distributor unit (11) from the distributor cooling circuit (10) and from which a coolant, which is at a defined temperature, can be taken for a cooling function in at least one further cooling circuit (15; 18), which is connected to the coolant distributor unit (11), and/or to be returned to the distributor cooling circuit (10),
that a third cooling circuit as high-voltage component cooling circuit (15) is connected to the at least one coolant distributor unit (11), in which third cooling circuit coolant can be recirculated from the distributor cooling circuit (10) and/or from the cold store cooling circuit (12) by means of the at least one coolant distributor unit (11) in such a way that the at least one high-voltage component (17) which is in thermal contact with the high-voltage component cooling circuit (15) and/or is connected into the high-voltage component cooling circuit (15) can be cooled, and
wherein the coolant distributor unit (11) is an actuating device of a control apparatus which has at least one control valve and at least one conveying device, wherein provision is made for at least one setpoint temperature value or at least one setpoint temperature profile to be prescribed with respect to the at least one high-voltage component and furthermore at least one cooling sensor system to be provided on the or in the region of the at least one high-voltage component to be cooled, by means of which cooling sensor system the at least one actual temperature value can be detected, so that a coolant flow can be distributed by means of the coolant distributor unit (11) such that the at least one temperature setpoint value can be adjusted and cooling energy can be stored in the cold accumulator (13), **characterized in that**
a fourth cooling circuit as a vehicle interior cooling circuit is connected to the at least one coolant distributor unit (11), by means of which fourth cooling circuit at least one module (19) for controlling the climate of a vehicle interior can be cooled.

2. Vehicle according to Claim 1, **characterized in that** the fourth cooling circuit as HVAC cooling circuit (18) is connected to the at least one coolant distributor unit (11).

3. Vehicle according to Claim 1 or Claim 2, **characterized in that** at least one equalization tank (14) for the coolant is arranged in at least one of the cooling circuits (10, 12, 15, 18), preferably in the cold accumulator cooling circuit (12).

4. Vehicle according to one of Claims 1 to 3, **characterized in that** the coolant distributor unit (11) is designed as a distributor module, wherein provision is preferably made for at least one component of the cooling circuits (10, 12, 15, 18) of the cooling circuit system (3) and/or at least one high-voltage component (17) to be integrated into the coolant distributor unit (11).

5. Vehicle according to one of Claims 1 to 4, **characterized in that** the cooling circuit system (3) is operated at a lower pressure than the refrigerant circuit (4) and/or is operated with a water/antifreeze agent mixture, in particular a water/glycol mixture as coolant.

6. Method for operating an air-conditioning system in a vehicle, wherein the vehicle has at least one electrical machine and an air-conditioning system (1) by means of which at least one high-voltage component is cooled,
wherein the air-conditioning system (1) has a rechargeable cold accumulator (13) as energy store, which rechargeable cold accumulator is used and/or discharged at a time prescribed in a defined manner for cooling purposes and, when the engine is turned off in the stationary mode, for after-cooling the at least one high-voltage component,
wherein the air-conditioning system (1) has a refrigerant circuit (4) for a refrigerant as working medium, wherein at least one compressor (6), at least one condenser (7), at least one expansion element (8) and at least one evaporator (9) as cold generator are arranged in the refrigerant circuit (4),
wherein a cooling circuit system (3) is provided, which can be operated in terms of flow separately from the refrigerant circuit (4) with a dedicated coolant, which is independent of the working medium of the refrigerant circuit (4), in such a way
that a first cooling circuit, which forms a distributor cooling circuit (10), of the cooling circuit system (3) has at least one heat exchanger (2), which can be coupled in a heat-transmitting manner to the evaporator (9) of the refrigerant circuit (4), for transmitting cold and has a coolant distributor unit (11),
that a second cooling circuit as cold accumulator circuit (12) of the cooling circuit system (3) is connected to the coolant distributor unit (11), which second cooling circuit has at least one cold accumulator (13) in which cold energy can be stored by means of the coolant distributor unit (11) from the distributor cooling circuit (10) and from which a coolant, which is at a defined temperature, can be taken for a cooling function in at least one further cooling circuit (15; 18), which is connected to the coolant distributor unit (11), and/or to be returned to the distributor cooling circuit (10),
that a third cooling circuit as high-voltage component cooling circuit (15) is connected to the coolant distributor unit (11), in which third cooling circuit coolant can be recirculated from the distributor cooling circuit (10) and/or from the cold store cooling circuit (12) by means of the coolant distributor unit (11) in such a way that the at least one high-voltage component (17) which is in thermal contact with the high-voltage component cooling circuit (15) and/or is connected into the high-voltage component cooling circuit (15) is cooled,
that a fourth cooling circuit as a vehicle interior cooling circuit is connected to the at least one coolant distributor unit (11), by means of which fourth cooling circuit at least one module (19) for controlling the climate of a vehicle interior is cooled, and
wherein the coolant distributor unit (11) is an actuating device of a control apparatus which has at least one control valve and at least one conveying device, wherein provision is made for at least one setpoint temperature value or at least one setpoint temperature profile to be prescribed with respect to the at least one high-voltage component and furthermore at least one cooling sensor system to be provided on the or in the region of the at least one high-voltage component to be cooled, by means of which cooling sensor system the at least one actual temperature value is detected, so that a coolant flow is distributed by means of the coolant distributor unit (11) such that the at least one setpoint temperature value is adjusted and cooling energy is stored in the cold accumulator (13).

7. Method according to Claim 6, **characterized**
**in that** the at least one compressor (6) of the air-conditioning system (1) is activated in the driving mode, so that cold is generated at the at least one evaporator (9) and is available to the coolant distributor unit (11) via the heat exchanger (2),
**in that**, by actuating the coolant distributor unit (11), the cooling energy required for respectively current cooling is supplied to the at least one high-voltage component (17), preferably the at least one high-voltage component and at least one vehicle interior module (19), and cooling energy available surplus to this is stored in the cold accumulator (13), and
**in that**, when the engine is switched off without compressor operation, the at least one high-voltage component (17) is supplied with cooling energy from the cold store (13) by means of the coolant distributor unit (11), in particular by actuating a distributor pump contained therein, in an after-cooling time prescribed in a defined manner, possibly in conjunction with continued running of at least one high-voltage component (17), wherein provision is preferably made for a driver's cab interior to also possibly be cooled depending on the quantity of cooling energy available.

8. Utility vehicle as hybrid vehicle or as electrically driven vehicle according to one of Claims 1 to 5 and/or comprising an air-conditioning system (1) which is operated using a method according to either of Claims 6 and 7.

## Revendications

1. Véhicule comprenant au moins une machine électrique et un système de climatisation (1) avec lequel au moins un composant à haute tension peut être refroidi,
le système de climatisation (1) comportant un accumulateur de froid rechargeable (13), servant de tampon d'énergie, qui peut être utilisé et/ou déchargé à un instant défini spécifié pour effectuer le refroidissement et, lorsque le moteur est arrêté, pour effectuer en mode stationnaire un post-refroidissement de l'au moins un composant à haute tension,
le système de climatisation (1) comportant un circuit de réfrigérant (4) destiné à un réfrigérant servant de milieu de travail, au moins un compresseur (6), au moins un condensateur (7), au moins un élément d'expansion (8) et au moins un évaporateur (9) étant disposés comme générateur de froid dans le circuit de réfrigérant (4),
un système de circuit de refroidissement (3) étant prévu qui peut fonctionner fluidiquement en continu séparément du circuit de réfrigérant (4) avec son propre réfrigérant qui est indépendant du milieu de travail du circuit de réfrigérant (4) de telle sorte que
un premier circuit de refroidissement, qui forme un circuit de refroidissement et de distribution (10), du système de circuits de refroidissement (3) comporte au moins un échangeur de chaleur (2), qui peut être accouplé en transmission de chaleur à l'évaporateur (9) du circuit de réfrigérant (4) pour transmettre du froid, et au moins une unité de distribution de réfrigérant (11),
un deuxième circuit de refroidissement, servant de circuit de refroidissement d'accumulateur de froid (12) du système de circuits de refroidissement (3), est raccordé à l'au moins une unité de distribution de réfrigérant (11) et qui comporte au moins un accumulateur de froid (13) dans lequel de l'énergie froide provenant du circuit de refroidissement et de distribution (10) peut être stockée au moyen d'au moins une unité de distribution de réfrigérant (11) et duquel un réfrigérant de température définie peut être retiré pour remplir une fonction de refroidissement dans au moins un autre circuit de refroidissement (15 ; 18), raccordé à l'unité de distribution de réfrigérant (11), et/ou pour retourner dans le circuit de refroidissement et de distribution (10),
un troisième circuit de refroidissement, qui sert de circuit de refroidissement de composant à haute tension (15) et dans lequel le réfrigérant provenant du circuit de refroidissement et de distribution (10) et/ou du circuit de refroidissement d'accumulateur de froid (12) peut être mis en circulation au moyen de l'au moins une unité de distribution de réfrigérant (11), est raccordé à l'au moins une unité de distribution de réfrigérant (11) de manière à pouvoir refroidir l'au moins un composant à haute tension (17) qui est en contact thermique avec le circuit de refroidissement de composant à haute tension (15) et/ou qui est inséré dans le circuit de refroidissement de composant à haute tension (15) et
l'unité de distribution de réfrigérant (11) étant un moyen de réglage d'un dispositif de régulation qui comporte au moins une soupape de commande et au moins un moyen de transport, au moins une valeur de température cible ou au moins une variation de valeur de température cible étant prévue qui est spécifiée relativement à l'au moins un composant à haute tension et en outre au moins un système de capteurs de refroidissement étant prévu sur ou dans la zone de l'au moins un composant à haute tension à refroidir, lequel système permet de détecter au moins une valeur de température réelle de façon à pouvoir distribuer un flux de réfrigérant au moyen de l'unité de distribution de réfrigérant (11) afin de pouvoir réguler l'au moins une valeur de température cible et de pouvoir tamponner de l'énergie froide dans l'accumulateur de froid (13),
**caractérisé en ce qu'**un quatrième circuit de refroidissement, servant de circuit de refroidissement d'habitacle de véhicule, qui permet de refroidir au moins un module (19) de climatisation d'un habitacle de véhicule, est raccordé à l'au moins une unité de distribution de réfrigérant (11).

2. Véhicule selon la revendication 1, **caractérisé en ce que** le quatrième circuit de refroidissement, servant de circuit de refroidissement HVAC (18), est raccordé à l'au moins une unité de distribution de réfrigérant (11).

3. Véhicule selon la revendication 1 ou la revendication 2, **caractérisé en ce qu'**au moins un vase d'expansion (14) destiné au réfrigérant est disposé dans l'un au moins des circuits de refroidissement (10, 12, 15, 18), de préférence dans le circuit de refroidissement d'accumulateur de froid (12).

4. Véhicule selon l'une des revendications 1 à 3, **caractérisé en ce que** l'unité de distribution de réfrigérant (11) est conçue comme un module de distribution, au moins un composant des circuits de refroidissement (10, 12, 15, 18) du système de circuits de refroidissement (3) et/ou au moins un composant à haute tension (17) étant de préférence prévus qui sont intégrés dans l'unité de distribution de réfrigérant (11).

5. Véhicule selon l'une des revendications 1 à 4, **caractérisé en ce que**, par rapport au circuit de réfrigérant (4), le système de circuits de refroidissement (3) est utilisé à une pression plus faible et/ou avec un mélange eau-antigel, notamment un mélange eau-glycol, comme réfrigérant.

6. Procédé de fonctionnement d'un système de climatisation dans un véhicule, le véhicule comportant au moins une machine électrique et un système de climatisation (1) au moyen duquel au moins un composant à haute tension est refroidi,
le système de climatisation (1) comportant un accumulateur de froid rechargeable (13), servant de tampon d'énergie, qui est utilisé et/ou déchargé à un instant défini spécifié pour effectuer le refroidissement et, lorsque le moteur est arrêté, pour effectuer en mode stationnaire une post-refroidissement de l'au moins un composant à haute tension,
le système de climatisation (1) comportant un circuit de réfrigérant (4) destiné à un réfrigérant servant de milieu de travail, au moins un compresseur (6), au moins un condensateur (7), au moins un élément d'expansion (8) et au moins un évaporateur (9) étant disposés comme générateur de froid dans le circuit de réfrigérant (4),
un système de circuits de refroidissement (3) étant prévu qui fonctionne fluidiquement en continu séparément du circuit de réfrigérant (4) avec son propre réfrigérant qui est indépendant du milieu de travail du circuit de réfrigérant (4) de telle sorte que
un premier circuit de refroidissement, qui forme un circuit de refroidissement et de distribution (10), du système de circuits de refroidissement (3) comporte au moins un échangeur de chaleur (2), qui peut être accouplé en transmission de chaleur à l'évaporateur (9) du circuit de réfrigérant (4) pour transmettre du froid, et au moins une unité de distribution de réfrigérant (11),
un deuxième circuit de refroidissement, servant de circuit de refroidissement d'accumulateur de froid (12) du système de circuits de refroidissement (3), est raccordé à l'unité de distribution de réfrigérant (11) et comporte au moins un accumulateur de froid (13) dans lequel de l'énergie froide provenant du circuit de refroidissement et de distribution (10) peut être stockée au moyen d'au moins une unité de distribution de réfrigérant (11) et duquel un réfrigérant de température définie est retiré pour remplir une fonction de refroidissement dans au moins un autre circuit de refroidissement (15 ; 18), raccordé à l'unité de distribution de réfrigérant (11), et/ou pour retourner dans le circuit de refroidissement et de distribution (10),
un troisième circuit de refroidissement, qui sert de circuit de refroidissement de composant à haute tension (15) et dans lequel le réfrigérant provenant du circuit de refroidissement et de distribution (10) et/ou du circuit de refroidissement d'accumulateur de froid (12) est mis en circulation au moyen de l'au moins une unité de distribution de réfrigérant (11), est raccordé à l'unité de distribution de réfrigérant (11) de manière à pouvoir refroidir l'au moins un composant à haute tension (17) qui est en contact thermique avec le circuit de refroidissement de composant à haute tension (15) et/ou qui est inséré dans le circuit de refroidissement de composant à haute tension (15),
un quatrième circuit de refroidissement, servant de circuit de refroidissement d'habitacle de véhicule, qui permet de refroidir au moins un module (19) de climatisation d'un habitacle de véhicule, est raccordé à l'au moins une unité de distribution de réfrigérant (11), et
l'unité de distribution de réfrigérant (11) étant un moyen de réglage d'un dispositif de régulation qui comporte au moins une soupape de commande et au moins un moyen de transport, au moins une valeur de température cible ou au moins une variation de valeur de température cible étant prévue qui est spécifiée relativement à l'au moins un composant à haute tension et en outre au moins un système de capteurs de refroidissement étant prévu sur ou dans la zone de l'au moins un composant à haute tension à refroidir, lequel système permet de détecter au moins une valeur de température réelle de façon à distribuer un flux de réfrigérant au moyen de l'unité de distribution de réfrigérant (11) afin de réguler l'au moins une valeur de température cible et de tamponner de l'énergie froide dans l'accumulateur de froid (13).

7. Procédé selon la revendication 6, **caractérisé en ce que**
l'au moins un compresseur (6) du système de climatisation (1) est activé pendant le roulement de façon à ce que du froid soit généré au niveau de l'au moins un évaporateur (9) et soit disponible par le biais de l'échangeur de chaleur (2) au niveau de l'unité de distribution de réfrigérant (11),
par commande de l'unité de distribution de réfrigérant (11), de l'énergie de refroidissement, nécessaire à un refroidissement actuel, est fournie à l'au moins un composant à haute tension (17), de préférence à l'au moins un composant à haute tension et à l'au moins un module d'habitacle de véhicule (19), et un excédent d'énergie de refroidissement est stocké dans l'accumulateur de froid (13), et
lorsque le moteur est arrêté, l'au moins un composant à haute tension (17) est alimenté en énergie de refroidissement provenant de l'accumulateur de froid (13) à un instant de post-refroidissement défini, éventuellement en relation avec une marche à vide d'au moins un composant à haute tension (17), au moyen de l'unité de distribution de réfrigérant (11), en particulier par commande d'une pompe de distribution placée à l'intérieur, sans que le compresseur ne fonctionne, le refroidissent éventuel de l'habitacle de conducteur étant de préférence également prévu en fonction de la quantité d'énergie de refroidissement disponible.

8. Véhicule utilitaire se présentant comme un véhicule hybride ou comme un véhicule à propulsion électrique selon l'une des revendications 1 à 5 et/ou comprenant un système de climatisation (1) qui fonctionne avec un procédé selon l'une des revendications 6 et 7.
